# EUROPEAN PATENT SPECIFICATION

(11) **EP 4 469 999 B1**
(45) Date of publication and mention of the grant of the patent: **11.03.2026**
(21) Application number: 23707842.3
(22) Date of filing: 30.01.2023
(51) Int. Cl.: G10L 15/06, G10L 15/16, G06N 3/08

(54) **SELF-SUPERVISED LEARNING FOR AUDIO PROCESSING**
SELBSTÜBERWACHTES LERNEN ZUR AUDIOVERARBEITUNG
APPRENTISSAGE AUTO-SUPERVISÉ POUR TRAITEMENT AUDIO

(30) Priority: 28.01.2022 US 202263304455 P
(43) Date of publication of application: 04.12.2024
(73) Proprietor: Google LLC, Mountain View, CA 94043 (US)
(72) Inventor: CHIU, Chung-Cheng, Mountain View, California 94043 (US); QIN, Weikeng, Mountain View, California 94043 (US); YU, Jiahui, Mountain View, California 94043 (US); WU, Yonghui, Mountain View, California 94043 (US); ZHANG, Yu, Mountain View, California 94043 (US)
(74) Representative: Hau, Darren Jun Wai
(86) International application number: PCT/US2023/061558
(87) International publication number: WO 2023/147539

(56) References cited:
- BAEVSKI ALEXEI ET AL: "wav2vec 2.0: A Framework for Self-Supervised Learning of Speech Representations", 22 October 2020 (2020-10-22), pages 1 - 19, XP055981050, Retrieved from the Internet <URL:https://arxiv.org/pdf/2006.11477.pdf> [retrieved on 20221114]
- ALEC RADFORD ET AL: "Improving Language Understanding by Generative Pre-Training", 31 December 2018 (2018-12-31), XP055608004, Retrieved from the Internet <URL:https://s3-us-west-2.amazonaws.com/openai-assets/research-covers/language-unsupervised/language_understanding_paper.pdf> [retrieved on 20190723]
- CHUNG-CHENG CHIU ET AL: "Self-supervised Learning with Random-projection Quantizer for Speech Recognition", ARXIV.ORG, CORNELL UNIVERSITY LIBRARY, 201 OLIN LIBRARY CORNELL UNIVERSITY ITHACA, NY 14853, 29 June 2022 (2022-06-29), XP091254049

## Description

### BACKGROUND

This specification relates to training neural networks for performing audio processing.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters. Baevski, Alexei, et al. "wav2vec 2.0: A framework for self-supervised learning of speech representations." Advances in neural information processing systems 33 (2020): 12449-12460 discloses that learning powerful representations from speech audio alone followed by fine-tuning on transcribed speech can outperform the best semisupervised methods while being conceptually simpler. wav2vec 2.0 masks the speech input in the latent space and solves a contrastive task defined over a quantization of the latent representations which are jointly learned. Radford, Alec, et al. "Improving language understanding by generative pre-training." (2018) discloses that natural language understanding comprises a wide range of diverse tasks such as textual entailment, question answering, semantic similarity assessment, and document classification. Although large unlabeled text corpora are abundant, labeled data for learning these specific tasks is scarce, making it challenging for discriminatively trained models to perform adequately. Large gains on these tasks can be realized by generative pre-training of a language model on a diverse corpus of unlabeled text, followed by discriminative fine-tuning on each specific task.

### SUMMARY

This specification describes a system implemented as computer programs on one or more computers in one or more locations that trains an audio-processing neural network, i.e., determining the network parameters of the audio-processing neural network.

In general, the audio-processing neural network is configured to perform an audio-processing task, and includes at least (1) a first encoder network having a first set of encoder network parameters and (2) a decoder network having a set of decoder network parameters.

In one innovative aspect, this specification describes a method for training the audio-processing neural network. The method is implemented by a system including one or more computers.

The invention is defined by the independent claims and, preferably, by the dependent claims.

The subject matter described in this specification can be implemented in particular embodiments so as to realize one or more of the following advantages.

This specification describes techniques for performing self-supervised learning that combines pre-training of an audio-processing neural network using unsupervised data with fine-tuning using labeled training examples. Compared to completely supervised learning techniques, the self-supervised learning provides significant improvement in the quality of the audio processing models because this approach enables the model to learn from a large unsupervised dataset in addition to supervised learning. The capability of learning from unsupervised data is particularly beneficial when labeled data is limited and opens up new opportunities for low-resource languages and domains.

In addition, the techniques described in this specification provide several advantages over conventional self-supervised learning techniques. Conventional self-supervised learning techniques typically involve learning feature representations of the input audio data before mapping the feature representations to discrete tokens (e.g., discrete text tokens). This may lead to challenges that can impede the applicability and efficacy of the audio processing models. For example, the integration of representation learning and self-supervised learning often requires the model to act the role of providing audio representation while still being effective for the downstream tasks. An effective representation learning model, however, may not always be effective for downstream tasks. For example, a good representation learning model may require accessing the future context of the utterance, while downstream tasks may require a low latency model which prohibits the access of the future context. Further, the objectives of representation learning and self-supervised learning are not always aligned, and the combination of the two aspects often results in complex and computationally demanding algorithms.

The techniques described in this specification do not require learning feature representations of un-labeled audio data during pre-training, and thus can overcome certain challenges associated with conventional self-supervised learning techniques. Instead of performing feature representation learning, in some implementations of the described techniques, the system trains an encoder network of the audio processing model to predict masked sections of an audio data input based on the unmasked audio data that has been processed with a random-projection quantizer. The random-projection quantizer does not require representation learning, and is independent from the audio processing model. As a result, the described techniques can be used in a wide range of audio processing network architectures, and can achieve state-of-the-art prediction accuracies and speed for both streaming and non-streaming tasks while maintaining computational efficiency.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example training system for training an audio-processing neural network.
FIG. 2 shows an example process of generating self-supervised training examples for training an encoder network.
FIG. 3 is a flow diagram illustrating an example process for training an audio-processing neural network.
FIG. 4 shows a performance comparison between audio-processing neural networks trained using random-projection quantization pre-training and audio-processing neural networks trained using baseline methods.
FIG. 5 shows another performance comparison between audio-processing neural networks trained using random-projection quantization pre-training and audio-processing neural networks trained using baseline methods.

Like reference numbers and designations in the various drawings indicate like elements.

### DETAILED DESCRIPTION

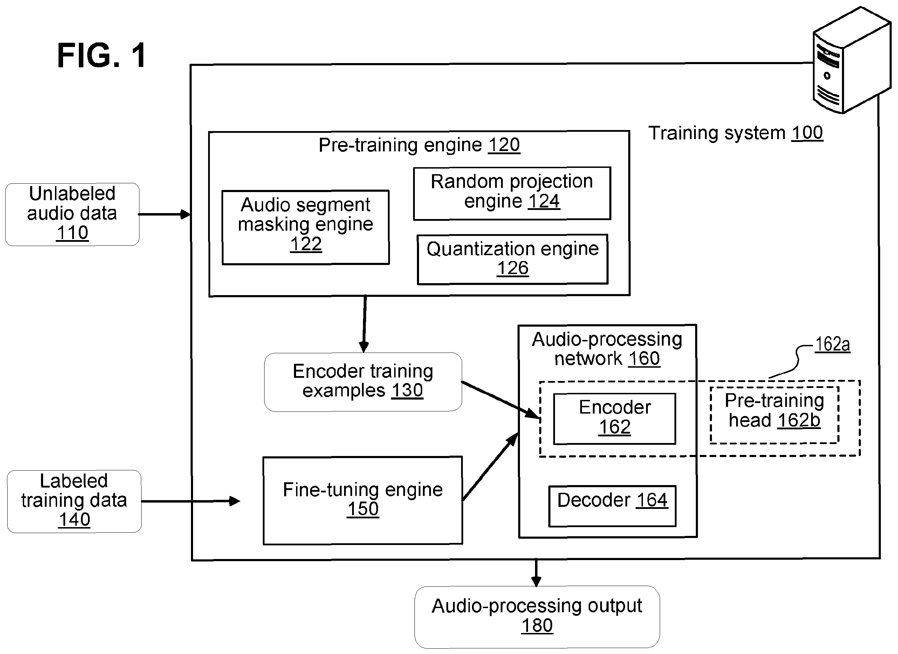

FIG. 1 shows an example of a training system 100 for training an audio-processing neural network 160. The system 100 is an example of a system implemented as computer programs on one or more computers in one or more locations, in which the systems, components, and techniques described below can be implemented.

In general, after the training process, the system 100 or another system can use the trained audio-processing neural network 160 to process audio data to perform an audio-processing task, such as a speech recognition task, a language identification task, a voice recognition task, a music transcription task, an audio classification task, and so on.

In a particular example for a speech recognition task, the trained neural network can be used to process audio data, e.g., data received from an audio sensing device such as a microphone, to generate a speech recognition output, e.g., an output that indicates the spoken contents in the audio data, such as a text transcript of the spoken contents.

As another example for a hotword detection task, if the input to the neural network is an audio data sequence representing a spoken utterance, the output generated by the neural network can indicate whether a particular word or phrase ("hotword") was spoken in the utterance.

As an example of a language identification task, if the input to the neural network is an audio data sequence representing a spoken utterance, the output generated by the neural network can identify the natural language in which the utterance was spoken.

As an example of a voice recognition task, the input to the neural network can be an audio data sequence representing a spoken utterance from a particular person, and the output generated by the neural network can identify the identity of the particular person.

As an example of a music transcription task, the input to the neural network can be an audio data sequence representing a music melody or a music performance, and the output generated by the neural network can identify a transcription of the music melody or performance to automatically generate a music sheet.

As an example of an audio classification task, the input to the neural network can be an audio data sequence representing a sound recorded by an audio sensor, and the output generated by the neural network can identify a classification of the sound that indicates a property or attribute of the sound, such as the identity of the subject (e.g., a particular types of devices, a type of animals) that made the sound, the conditions (e.g., under normal or abnormal condition) of the subject that makes the sound, or identify a type or condition of the sensor that recorded the sound.

In general, the input audio data includes a plurality of data frames corresponding to a plurality of time points. In some cases, the audio-processing neural network 160 can be a non-streaming model. That is, the audio-processing neural network 160 is configured to make a prediction for a given time point t based on both past and future data frames (i.e., data frames with corresponding time points both prior to and after the given time point) of the input audio data. In some other cases, the audio-processing neural network 160 can be a streaming model, where the network is configured to predict an audio processing output for a given time point based on past data frames (i.e., data frames with corresponding time points up to the given time point) but not on future data frames of the input audio data.

The audio-processing neural network 160 generally includes an encoder network 162 configured to map an audio data input to encoded data that encodes contextual information in the audio data input, and a decoder network 164 configured to map an input derived from the encoded data to the audio processing output.

The encoder network 162 and the decoder network 164 can have any appropriate architectures. A particular example of an encoder architecture is described in Zhang, et al, "Pushing the limits of semisupervised learning for automatic speech recognition," arXiv preprint arXiv: 2010.10504, 2020. Another example of the encoder architecture is described in Yu, et al., "FastEmit: Low-latency Streaming ASR with Sequence-level Emission Regularization," in Proc. ICASSP, 2021. As a particular example, the decoder architecture can include an RNN Transducer (RNN-T) with additional layers of unidirectional LSTMs.

The system 100 trains the audio-processing neural network 160 using a self-supervised learning process.

The system 100 includes a pre-training engine 120 that performs a pre-training process and a fine-tuning engine 150 that performs a fine-tuning training process.

During pre-training, the pre-training engine 120 uses unlabeled audio data 110 to update the network parameters of the encoder network 122 to a set of pre-trained values. In this specification, the unlabeled audio data refers to audio data for which training labels are not available, or even when some of the training labels are available, are not used during the training.

During fine-tuning, the fine-tuning engine 150 uses labeled training data 140 to train the audio-processing neural network 160 end-to-end to update both the network parameters of the encoder network 122 (with the parameters initialized to the pre-trained values) and the network parameters of the decoder network 124. The labeled training data 140 in general includes a set of labeled training examples. Each labeled training example includes an audio data training input and a corresponding audio-processing label. The audio-processing label is a target output of the audio-processing neural network 160 for an audio-processing task when the corresponding audio data training input is processed by audio-processing neural network 160.

In general, the pre-training process trains the encoder network 162 to learn contextual information in the unlabeled audio data 110.

In order to use the unlabeled audio data 110 to pre-train the encoder network 162, the pre-training engine 120 of the system 100 defines one or more self-supervised training tasks from the unlabeled audio data 110, and trains the encoder network 162 on the one or more self-supervised training tasks.

For example, the self-supervised training task can be a task that requires the encoder network to process an unlabeled audio data segment with portions of the data segment having been masked out (i.e., where data in masked portions having been replaced by other data, such as data sampled from a noise signal), to predict encoded data for the masked out portions of the data segment.

In particular, the system can generate, from a set of un-labeled audio data segments, a set of encoder training examples 130 for the self-supervised training task. Each encoder training example includes a respective encoder training input and a respective encoder target label.

The pre-training engine 120 can generate the respective encoder training input of each encoder training example 130 by processing a respective un-labeled audio data segment. In some implementations, an audio segment masking engine 122 can generate the encoder training input by masking out one or more sections of the respective un-labeled audio data segment. That is, the audio segment masking engine 122 can replace data in one or more sections of consecutive frames of the audio data segment with other data, such as data values sampled from a noise signal or data values set to predetermined fixed values, e.g., zeroes, that is independent of the content of the audio data segment.

The pre-training engine 120 can generate the encoder target label in each encoder training example 130 by performing a projection followed by a quantization on the respective un-labeled audio data segment. To perform the projection, a random projection engine 124 can apply a projection matrix to each of a set of audio data frames in the respective un-labeled audio data segment to generate projected data that includes, e.g., a set of projected vectors. For example, to generate a projected vector for an audio data frame comprising a vector of filter bank coefficients, the random projection engine may multiply the projection matrix by the vector of filter bank coefficients,

**In** some cases, the projected data is generated from a set of audio data frames that have been selected to be masked out by the audio segment masking engine 122 during generating the respective encoder training input. In some other cases, the projected data can be generated from all data frames in the respective un-labeled audio data segment. The elements of the projection matrix can be values randomly selected according to a predefined distribution, such as a uniform distribution.

To perform the quantization, a quantization engine 126 can identify, from a set of template vectors (or codebook vectors), a template vector that has the shortest distance from a given projected vector, and assign an element value of the encoder target label as the index of the identified codebook vector in the set of codebook vectors. The set of codebook vectors can also be randomly generated according to a predefined distribution. In some implementations, the element values of the projection matrix and/or the codebook vectors remain fixed during the pre-training process. In this case, the self-supervised training task for the encoder can be a task for predicting, from the respective masked audio data segment, indexes of the codebook vectors identified for the selected audio frames.

**In** general, the random projection performs dimension reduction for the audio signals while the random codebook provides an approximated discrete representation of the audio data distribution.

In some implementations, during pre-training, the pre-training engine 120 can include a pre-training neural network head 162b (e.g., including one or more network layers) 162b as the output layer for the encoder network 162 to output the predicted labels. That is, the pre-training engine 120 trains a neural network 162a that includes the encoder network 162 and the pre-training neural network head 162b. The pre-training neural network head 162b will not be included during the fine-tuning process when the encoder network 162 and the decoder network 164 are trained end-to-end. The pre-training engine 120 can use the pre-training neural network head 162b to accommodate different architectures of the encoder network 162 and/or different types of tasks, so that the same training framework can be used for a variety of scenarios. In particular, the pre-training neural network head 162b can be used to select encoded embeddings outputted by the previous layer to generate the predicted labels. In some implementations, the system can re-use the same pre-trained encoder network 162 for multiple different downstream tasks, or can train a multi-task decoder that performs multiple different tasks in parallel.

**In** a particular example, the pre-training neural network head 162b can be a softmax layer that maps the selected embedding(s) to respective logits (e.g., through one or more learned linear transformations) and then maps the logits to a probability distribution over labels, e.g., over codebook vector indices.

For example, to perform training for a non-streaming task, the system 100 can use the softmax layer 162b to select encoded embeddings corresponding to time points that are both before and after the frames that have been masked out, to generate the predicted labels for the masked frames. Alternatively, to perform training for a streaming task, the system 100 can use the softmax layer 162b to select only those encoded embeddings corresponding to the time points of, and optionally, time points before the frames that have been masked out, to generate the predicted labels for the masked frames. In some cases, for each masked out set of one or more frames, the softmax layer 162b processes the encoded embedding for the time points corresponding to the masked-out set to generate the prediction for the masked-out set of frames.

Once the encoder training examples 130 have been generated, the pre-training engine 120 can update the network parameters of the encoder network 162 to the pre-trained values by minimizing a self-supervised loss computed based on the generated encoder training examples 130. The pre-training engine 120 can update the parameters through any appropriate backpropagation-based machine learning technique, e.g., using the Adam or AdaGrad optimizers.

Similarly, during fine tuning, the fine-tuning training engine 150 updates the network parameters of the encoder network 162 and the decoder network 164 by minimizing a training loss including a supervised training less computed based at least on the labeled training examples 140.

**In** some implementations, the audio-processing neural network 160 further includes one or more additional layers that include a projection layer between the encoder network 162 and the decoder network 164. The additional layers can be used to help the audio-processing neural network 160 to adapt to the downstream audio-processing task. For example, the projection layer is configured to multiply the output of the previous layer with a matrix, and allows projecting the output of the encoder to a dimension that matches the decoder's input dimension.

While the above description describes configurations where the self-supervised pre-training (using unlabeled data 110) is performed prior to the supervised fine-tuning (using labeled data 140), in some cases, the pre-training and the fine-tuning can be performed jointly. For example, a self-supervised pre-training loss can be used as an auxiliary loss during the fine-tuning process. That is, the system 100 can train the networks on batches that include labeled and unlabeled data or can train the networks alternately on labeled data and unlabeled data. For the unlabeled data, the system 100 can use the self-supervised pre-training loss to update the encoder 162. For the labeled data, the system 100 can either (i) use the supervised loss to update encoder 162 and decoder 164 networks, or (ii) use both the supervised and self-supervised losses to update the encoder and decoder networks.

After the audio-processing neural network 160 have been trained, the system 100 or another system can use the trained audio-processing neural network 160 to perform an audio-processing task. For example, the system 100 can receive an audio input from an input device, and processes the audio input using at least the audio-processing neural network 160 that has been trained, to generate the audio processing output 180 corresponding to the received audio input. The system 100 can further output the audio processing output 180 through an output device. For example, the audio-processing task can be a speech recognition task, and the audio-processing neural network 160 is configured to process an audio data input to generate an output that characterizes language contents represented by the audio data input. In this case, the output 180 can include a predicted text transcript of the audio data input, and can be presented to a user using an output device, such as a computer display.

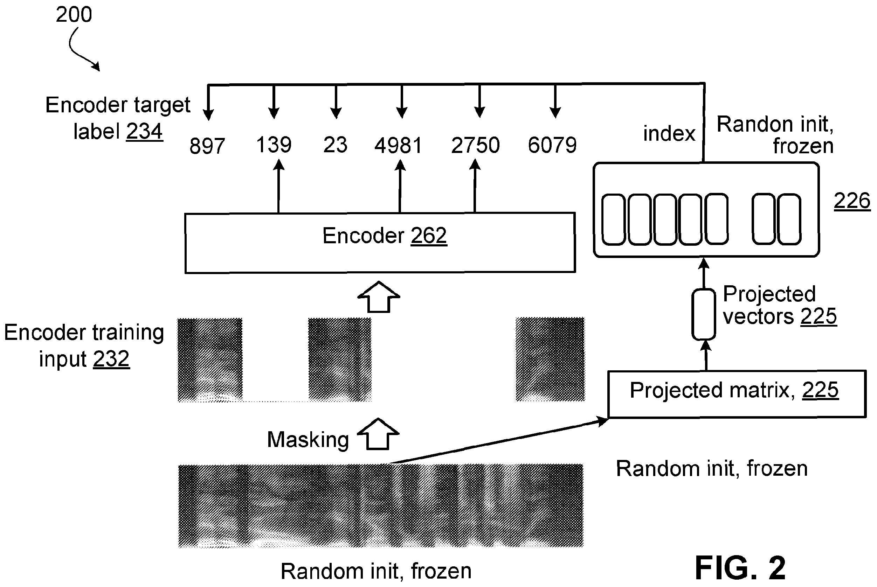

FIG. 2 illustrates an example process 200 of generating self-supervised training examples for training an encoder network. For convenience, the process 200 will be described as being performed by a system of one or more computers located in one or more locations. For example, the training system 100 of FIG. 1, appropriately programmed in accordance with this specification, can perform the process 200.

As shown in FIG. 2, the system receives an unlabeled audio segment 210. The unlabeled audio segment 210 includes a set of audio data frames corresponding to a plurality of time points (e.g., points along the horizontal axis of 210). Each audio data frame characterizes the audio signal at the corresponding time point. In one example, the audio data frame specifies a plurality of audio signal filter bank coefficients.

The system generates an encoder training input 232 by masking the unlabeled audio segment 210. In particular, the system can select one or more sections of consecutive audio data frames in the un-labeled audio data segment 210, and replace data in the selected audio data frames with noise data values. The noise data values can be sampled from a pre-defined distribution, such as a normal distribution with a 0 mean value and 0.1 standard deviations. In some implementations, the masking strategy can sample at every frame whether to apply masks to a section starting with the frame with a fixed probability. Each mask section spans from a starting frame with a fixed length.

The system applies a projection matrix 224 to audio data frames in the un-labeled audio data segment 210 to generate a set of projected vectors 225. The elements of the projection matrix 224 are values randomly selected according to a pre-defined distribution, such as a uniform distribution or any other appropriate distribution. The projection matrix 224 can be generated using any appropriate method. For example, the Xavier initialization process can be used to generate the projection matrix 224. Details of the Xavier initialization process can be found in Glorot, et al., "Understanding the difficulty of training deep feedforward neural networks," in Proceedings of the Thirteenth International Conference on Artificial Intelligence and Statistics, volume 9 of Proceedings of Machine Learning Research, pp. 249-256. PMLR, 13-15 May 2010. In some implementations, the elements of the projection matrix 224 are fixed during generating the encoder training examples.

In some implementations, before applying the projection matrix 224, the system can perform normalization of each audio data frame in the un-labeled audio data segment 210 to a predefined mean and a predefined standard deviation (e.g., a 0 mean and a standard deviation of 1). The normalization can prevent the random projection to collapse to a small subset of vectors.

After the projected vectors 225 have been generated, the system can use a codebook lookup process based on a codebook containing a set of indexed codebook vectors 226 to map the projected vectors 225 to a set of encoder target labels 234. In particular, for each given projected vector, the system identifies, from the codebook, a codebook vector that has the shortest distance from the given projected vector, and determines an element value of the encoder target label as an index of the identified codebook vector in the codebook. The codebook vectors can be vectors randomly generated according to an appropriate distribution, e.g., a uniform distribution. In some implementations, the codebook vectors remain unchanged during generating the encoder training examples.

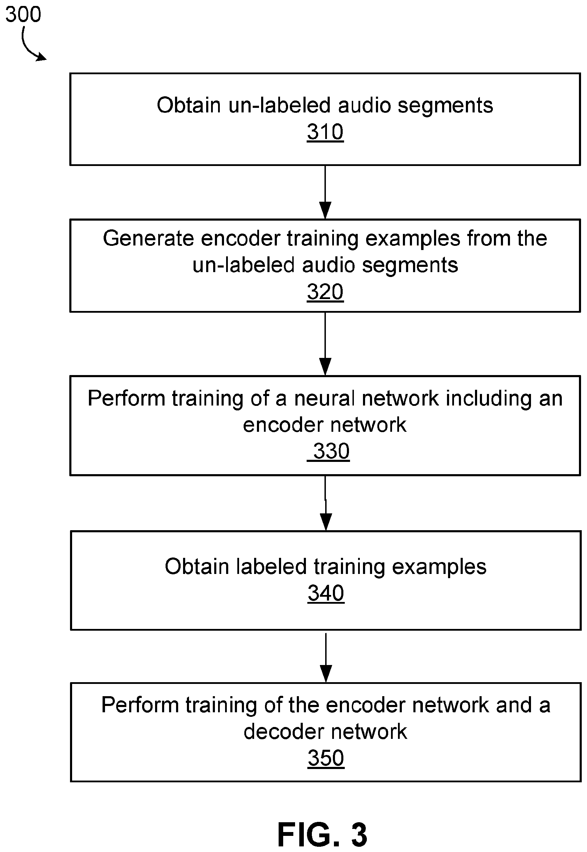

FIG. 3 is a flow diagram illustrating an example process 300 for training an audio-processing neural network. The audio-processing neural network is configured to perform an audio-processing task, and includes at least (1) a first encoder network having a first set of encoder network parameters and (2) a decoder network having a set of decoder network parameters.

For convenience, the process 300 will be described as being performed by a system of one or more computers located in one or more locations. For example, a training system, e.g., the training system 100 described with reference to FIG. 1, appropriately programmed in accordance with this specification, can perform the process 300.

At 310, the system obtains a set of un-labeled audio data segments. Each un-labeled audio data segment includes a respective plurality of audio data frames corresponding to a plurality of time points.

At 320, the system generates, from the set of un-labeled audio data segments, a set of encoder training examples. Each encoder training example includes a respective encoder training input and a respective encoder target label.

To generate each encoder training example, the system generates the respective encoder training input by processing a respective un-labeled audio data segment in the set of un-labeled audio data segments, generates a respective set of projected vectors by applying a projection matrix to each of a set of audio data frames in the respective un-labeled audio data segment, and processes the respective set of projected vectors to generate a respective encoder target label for the encoder training example. The elements of the projection matrix are values randomly selected according to a first distribution. The first distribution can be a uniform distribution. In some implementations, the values of the elements of the projection matrix remain unchanged during generating the set of encoder training examples.

At 330, the system performs training of a second encoder neural network that comprises at least the first encoder neural network on the set of generated encoder training examples to update at least the first set of encoder network parameters of the first encoder neural network to a set of pre-trained values.

At 340, the system obtains one or more labeled training examples. Each labeled training example includes an audio data training input and a corresponding audio-processing label. The audio-processing label is a target output of the audio-processing neural network 160 for an audio-processing task when the corresponding audio data training input is processed by audio-processing neural network.

At 350, the system further performs training of the audio-processing neural network on the labeled training examples to update at least (1) the first set of network parameters of the encoder network and (2) the second set of network parameters of the decoder network, wherein the first set of network parameters are initialized with the set of pre-trained values.

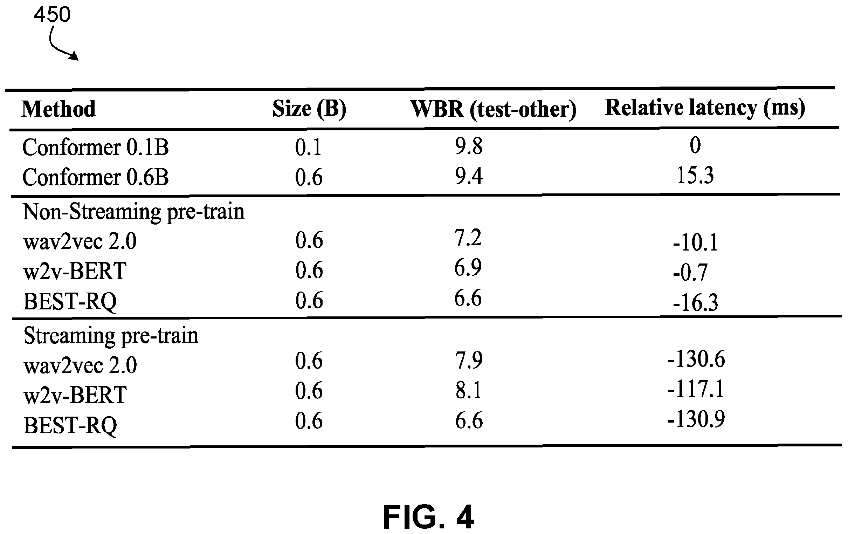

FIG. 4 shows a performance comparison 400 between audio-processing neural networks trained using random-projection quantization pre-training ("BEST-RQ"), as described with references to FIGs. 1, 2, and 3, and audio-processing neural networks trained using baseline state-of-the-art methods, including the "wav2vec 2.0" as described in Baevski, et al., "wav2vec 2.0: A framework for self-supervised learning of speech representations," arXiv preprint arXiv:2006.11477, 2020b, and "w2v-BERT" as described in Chung, et al., "W2v-bert: Combining contrastive learning and masked language modeling for self-supervised speech pre-training," arXiv preprint arXiv: 2108.06209, 2021.

The audio-processing neural networks were trained to perform speech recognition tasks. Word-error-rates (WER) and relative latencies were calculated by using the trained models on the LibriLight dataset. As shown in FIG. 4, the training method described in this specification in general outperforms the baseline methods in both WER and latency for both streaming and non-streaming pre-training.

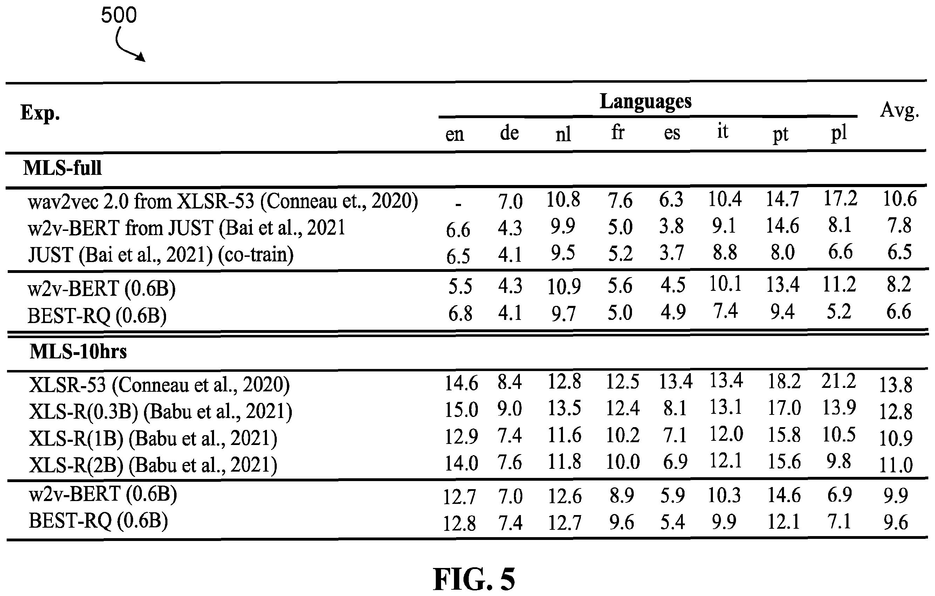

FIG. 5 shows the performance (specifically, WER) comparison 500 of the audio-processing neural networks for speech recognition tasks for multiple languages. As shown in FIG. 5, the training method described in this specification ("BEST-RQ") in general outperforms the baseline methods in for most of the tested languages.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, .e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method for training an audio processing neural network configured to perform an audio processing task, wherein the audio processing neural network comprises at least a first encoder network having a first set of encoder network parameters and a decoder network having a set of decoder network parameters, the method comprising:
obtaining (310) a set of un-labeled audio data segments, each un-labeled audio data segment including a respective plurality of audio data frames corresponding to a plurality of time points;
generating (320), from the set of un-labeled audio data segments, a set of encoder training examples wherein each encoder training example includes a respective encoder training input and a respective encoder target label, the generating comprising, for each encoder training example:
generating the respective encoder training input by processing a respective unlabeled audio data segment in the set of un-labeled audio data segments comprising:
generating a respective masked audio data segment from the respective un-labeled audio data segment, comprising:
selecting one or more audio data frames in the respective unlabeled audio data segment; and
replacing data in the one or more selected audio data frames with noise data values or data values set to predetermined fixed values that are independent of the content of the audio data segment;
generating a respective set of projected vectors by applying a projection matrix to each of a set of audio data frames in the respective un-labeled audio data segment, wherein elements of the projection matrix are values randomly selected according to a first distribution; and
processing the respective set of projected vectors to generate a respective encoder target label for the encoder training example;
performing (330) training of a second encoder neural network that comprises at least the first encoder neural network on the set of generated encoder training examples to update at least the first set of encoder network parameters of the first encoder neural network to a set of pre-trained values;
wherein performing (330) training of the second encoder neural network comprises training the second encoder neural network on an encoder training task for predicting, from one or more input audio data frames in the respective masked audio data segment, a label for the one or more selected audio data frames in the respective un-labeled audio data segment;
obtaining (340) one or more labeled training examples, each labeled training example including an audio data training input and a corresponding audio-processing label; and
performing (350) training of the audio processing neural network on the labeled training examples to update at least the first set of network parameters of the encoder network and the second set of network parameters of the decoder network, wherein the first set of network parameters are initialized with the set of pre-trained values.

2. The method of claim 1, further comprising:
receiving an audio input from an input device; and
processing the audio input using at least the audio processing neural network, after the audio processing neural network having been trained, to generate the audio processing output corresponding to the received audio input; and optionally
the method further comprising:
outputting the audio processing output through an output device.

3. The method of any one of the preceding claims, wherein the audio processing task is a speech recognition task, and the audio processing neural network is configured to process an audio data input to generate an output that characterizes language contents represented by the audio data input; and optionally
wherein the output includes a predicted text transcript of the audio data input.

4. The method of any one of the preceding claims, wherein each audio data frame includes a plurality of audio signal filter bank coefficients; and/or
the method further comprising:
before generating, from the set of un-labeled audio data segments, the set of encoder training examples, performing normalization of each audio data frame in the set of un-labeled audio data segments to a predefined mean and a predefined standard deviation.

5. The method of any one of the preceding claims, wherein the set of audio data frames in the respective un-labeled audio data segment include the one or more selected audio data frames.

6. The method of any one of the preceding claims, wherein the noise data values are sampled from a second distribution; and optionally
wherein the second distribution is a normal distribution with a 0 mean value; and/or
wherein selecting the one or more audio data frames in the respective un-labeled audio data segment comprises:
determining, for each given audio data frame of the respective un-labeled audio data segment, whether to select the given audio data frame with a predefined probability, and in response to the given audio data frame having been determined to be selected, selecting the given audio data frame and a predefined number of consecutive audio data frames after the given audio data frame in the respective un-labeled audio data segment.

7. The method of any one of the preceding claims, wherein the values of the elements of the projection matrix remain unchanged during generating the set of encoder training examples; and/or
wherein the first distribution is a uniform distribution.

8. The method of any one of the preceding claims, wherein processing the respective set of projected vectors to generate the respective encoder target label comprises, for each given projected vector in the respective set of projected vectors:
identifying, from a set of codebook vectors, a codebook vector that has a shortest distance from the given projected vector; and
determining an element value of the encoder target label as an index of the identified codebook vector in the set of codebook vectors.

9. The method of claim 8 and also depending on claim 5, wherein the training task is a task for predicting, from the respective masked audio data segment, indexes of the codebook vectors identified for the one or more selected audio frames.

10. The method of claims 8 or 9, wherein the set of codebook vectors are randomly generated according to a third distribution; and optionally
wherein the third distribution is a uniform distribution; and/or
wherein the set of codebook vectors remain unchanged during generating the set of encoder training examples.

11. The method of any one of the preceding claims, wherein the second encoder neural network further comprises a softmax layer after the first encoder network; and/or
wherein the audio processing neural network is a non-streaming model configured to predict an audio processing output for a given time point based on an audio data input that includes data frames corresponding time points prior to and after the given time point; or
wherein the audio processing neural network is a streaming model configured to predict an audio processing output for a given time point based on an audio data input that includes data frames corresponding to time points prior to or at the given time point.

12. The method of any one of the preceding claims, wherein the audio processing neural network further includes one or more additional layers that include a projection layer between the first encoder network and the decoder network; and/or
wherein the decoder network includes one or more recurrent neural network (RNNs); and optionally
wherein the one or more RNNs include one or more LSTM networks; and optionally
wherein the decoder network includes an RNN transducer.

13. A computer-implemented method comprising:
receiving a new audio data input; and
processing the new audio data input using an audio processing neural network that has been trained using the method of any preceding claim to generate an audio processing output for an audio processing task.

14. A system comprising one or more computers and one or more storage devices storing instructions that when executed by the one or more computers cause the one or more computers to perform the operations of the respective method of any one of claims 1-13.

15. One or more computer storage media storing instructions that when executed by one or more computers cause the one or more computers to perform the operations of the respective method of any one of claims 1-13.

## Patentansprüche

1. Computerimplementiertes Verfahren zum Trainieren eines Audioverarbeitungs-Neuronalen-Netzwerks, das konfiguriert ist, eine Audioverarbeitungsaufgabe durchzuführen, wobei das Audioverarbeitungs-Neuronale-Netzwerk wenigstens ein erstes Encoder-Netzwerk mit einem ersten Satz von Encoder-Netzwerkparametern und ein Decoder-Netzwerk mit einem Satz von Decoder-Netzwerkparametern umfasst, wobei das Verfahren umfasst:
Erlangen (310) eines Satzes von unmarkierten Audiodatensegmenten, wobei jedes unmarkierte Audiodatensegment eine jeweilige Vielzahl von Audiodatenrahmen einschließt, die einer Vielzahl von Zeitpunkten entsprechen;
Erzeugen (320), aus dem Satz von unmarkierten Audiodatensegmenten, eines Satzes von Encoder-Trainingsbeispielen, wobei jedes Encoder-Trainingsbeispiel eine jeweilige Encoder-Trainingseingabe und ein jeweiliges Encoder-Ziel-Label einschließt, wobei das Erzeugen für jedes Encoder-Trainingsbeispiel umfasst:
Erzeugen der jeweiligen Encoder-Trainingseingabe durch Verarbeiten eines jeweiligen unmarkierten Audiodatensegments in dem Satz von unmarkierten Audiodatensegmenten, umfassend:
Erzeugen eines jeweiligen maskierten Audiodatensegments aus dem jeweiligen unmarkierten Audiodatensegment, umfassend:
Auswählen eines oder mehrerer Audiodatenrahmen in dem jeweiligen unmarkierten Audiodatensegment; und
Ersetzen von Daten in dem einen oder den mehreren ausgewählten Audiodatenrahmen durch Rauschdatenwerte oder Datenwerte, die auf vorbestimmte feste Werte gesetzt sind, die unabhängig von dem Inhalt des Audiodatensegments sind;
Erzeugen eines jeweiligen Satzes von projizierten Vektoren durch Anwenden einer Projektionsmatrix auf jeden eines Satzes von Audiodatenrahmen in dem jeweiligen unmarkierten Audiodatensegment, wobei Elemente der Projektionsmatrix Werte sind, die zufällig gemäß einer ersten Verteilung ausgewählt werden; und
Verarbeiten des jeweiligen Satzes von projizierten Vektoren, um ein jeweiliges Encoder-Ziel-Label für das Encoder-Trainingsbeispiel zu erzeugen;
Durchführen (330) des Trainings eines zweiten Encoder-Neuronalen-Netzwerks, das wenigstens das erste Encoder-Neuronale-Netzwerk umfasst, an dem Satz von erzeugten Encoder-Trainingsbeispielen, um wenigstens den ersten Satz von Encoder-Netzwerkparametern des ersten Encoder-Neuronalen-Netzwerks auf einen Satz von vortrainierten Werten zu aktualisieren;
wobei das Durchführen (330) des Trainings des zweiten Encoder-Neuronalen-Netzwerks das Trainieren des zweiten Encoder-Neuronalen-Netzwerks an einer Encoder-Trainingsaufgabe zum Vorhersagen, aus einem oder mehreren Eingabe-Audiodatenrahmen in dem jeweiligen maskierten Audiodatensegment, eines Labels für den einen oder die mehreren ausgewählten Audiodatenrahmen in dem jeweiligen unmarkierten Audiodatensegment umfasst;
Erlangen (340) eines oder mehrerer markierter Trainingsbeispiele, wobei jedes markierte Trainingsbeispiel eine Audiodaten-Trainingseingabe und ein entsprechendes Audioverarbeitungs-Label einschließt; und
Durchführen (350) des Trainings des Audioverarbeitungs-Neuronalen-Netzwerks an den markierten Trainingsbeispielen, um wenigstens den ersten Satz von Netzwerkparametern des Encoder-Netzwerks und den zweiten Satz von Netzwerkparametern des Decoder-Netzwerks zu aktualisieren, wobei der erste Satz von Netzwerkparametern mit dem Satz von vortrainierten Werten initialisiert wird.

2. Verfahren nach Anspruch 1, ferner umfassend:
Empfangen einer Audioeingabe von einer Eingabevorrichtung; und
Verarbeiten der Audioeingabe unter Verwendung wenigstens des Audioverarbeitungs-Neuronalen-Netzwerks, nachdem das Audioverarbeitungs-Neuronale-Netzwerk trainiert wurde, um die Audioverarbeitungsausgabe zu erzeugen, die der empfangenen Audioeingabe entspricht; und optional
wobei das Verfahren ferner umfasst:
Ausgeben der Audioverarbeitungsausgabe durch eine Ausgabevorrichtung.

3. Verfahren nach einem der vorhergehenden Ansprüche, wobei die Audioverarbeitungsaufgabe eine Spracherkennungsaufgabe ist und das Audioverarbeitungs-Neuronale-Netzwerk konfiguriert ist, eine Audiodateneingabe zu verarbeiten, um eine Ausgabe zu erzeugen, die Sprachinhalte charakterisiert, die durch die Audiodateneingabe repräsentiert werden; und optional wobei die Ausgabe ein vorhergesagtes Texttranskript der Audiodateneingabe einschließt.

4. Verfahren nach einem der vorhergehenden Ansprüche, wobei jeder Audiodatenrahmen eine Vielzahl von Audiosignal-Filterbank-Koeffizienten einschließt; und/oder wobei das Verfahren ferner umfasst:
vor dem Erzeugen, aus dem Satz von unmarkierten Audiodatensegmenten, des Satzes von Encoder-Trainingsbeispielen, Durchführen einer Normalisierung jedes Audiodatenrahmens in dem Satz von unmarkierten Audiodatensegmenten auf einen vordefinierten Mittelwert und eine vordefinierte Standardabweichung.

5. Verfahren nach einem der vorhergehenden Ansprüche, wobei der Satz von Audiodatenrahmen in dem jeweiligen unmarkierten Audiodatensegment den einen oder die mehreren ausgewählten Audiodatenrahmen einschließt.

6. Verfahren nach einem der vorhergehenden Ansprüche, wobei die Rauschdatenwerte aus einer zweiten Verteilung gezogen werden; und optional
wobei die zweite Verteilung eine Normalverteilung mit einem Mittelwert von 0 ist; und/oder
wobei das Auswählen des einen oder der mehreren Audiodatenrahmen in dem jeweiligen unmarkierten Audiodatensegment umfasst:
Bestimmen, für jeden gegebenen Audiodatenrahmen des jeweiligen unmarkierten Audiodatensegments, ob der gegebene Audiodatenrahmen mit einer vordefinierten Wahrscheinlichkeit ausgewählt werden soll, und als Reaktion darauf, dass bestimmt wurde, dass der gegebene Audiodatenrahmen ausgewählt werden soll, Auswählen des gegebenen Audiodatenrahmens und einer vordefinierten Anzahl von aufeinanderfolgenden Audiodatenrahmen nach dem gegebenen Audiodatenrahmen in dem jeweiligen unmarkierten Audiodatensegment.

7. Verfahren nach einem der vorhergehenden Ansprüche, wobei die Werte der Elemente der Projektionsmatrix während des Erzeugens des Satzes von Encoder-Trainingsbeispielen unverändert bleiben; und/oder
wobei die erste Verteilung eine gleichmäßige Verteilung ist.

8. Verfahren nach einem der vorhergehenden Ansprüche, wobei das Verarbeiten des jeweiligen Satzes von projizierten Vektoren zum Erzeugen des jeweiligen Encoder-Ziel-Labels für jeden gegebenen projizierten Vektor in dem jeweiligen Satz von projizierten Vektoren umfasst:
Identifizieren, aus einem Satz von Codebuch-Vektoren, eines Codebuch-Vektors, der einen kürzesten Abstand von dem gegebenen projizierten Vektor aufweist; und
Bestimmen eines Elementwerts des Encoder-Ziel-Labels als einen Index des identifizierten Codebuch-Vektors in dem Satz von Codebuch-Vektoren.

9. Verfahren nach Anspruch 8 und auch abhängig von Anspruch 5, wobei die Trainingsaufgabe eine Aufgabe zum Vorhersagen, aus dem jeweiligen maskierten Audiodatensegment, von Indizes der Codebuch-Vektoren ist, die für den einen oder die mehreren ausgewählten Audiorahmen identifiziert wurden.

10. Verfahren nach Anspruch 8 oder 9, wobei der Satz von Codebuch-Vektoren zufällig gemäß einer dritten Verteilung erzeugt wird; und optional
wobei die dritte Verteilung eine gleichmäßige Verteilung ist; und/oder
wobei der Satz von Codebuch-Vektoren während des Erzeugens des Satzes von Encoder-Trainingsbeispielen unverändert bleibt.

11. Verfahren nach einem der vorhergehenden Ansprüche, wobei das zweite Encoder-Neuronale-Netzwerk ferner eine Softmax-Schicht nach dem ersten Encoder-Netzwerk umfasst; und/oder
wobei das Audioverarbeitungs-Neuronale-Netzwerk ein Nicht-Streaming-Modell ist, das konfiguriert ist, eine Audioverarbeitungsausgabe für einen gegebenen Zeitpunkt basierend auf einer Audiodateneingabe vorherzusagen, die Datenrahmen einschließt, die Zeitpunkten vor und nach dem gegebenen Zeitpunkt entsprechen; oder
wobei das Audioverarbeitungs-Neuronale-Netzwerk ein Streaming-Modell ist, das konfiguriert ist, eine Audioverarbeitungsausgabe für einen gegebenen Zeitpunkt basierend auf einer Audiodateneingabe vorherzusagen, die Datenrahmen einschließt, die Zeitpunkten vor oder zu dem gegebenen Zeitpunkt entsprechen.

12. Verfahren nach einem der vorhergehenden Ansprüche, wobei das Audioverarbeitungs-Neuronale-Netzwerk ferner eine oder mehrere zusätzliche Schichten einschließt, die eine Projektionsschicht zwischen dem ersten Encoder-Netzwerk und dem Decoder-Netzwerk einschließen; und/oder
wobei das Decoder-Netzwerk ein oder mehrere rekurrente neuronale Netzwerke (RNNs) einschließt; und optional
wobei das eine oder die mehreren RNNs ein oder mehrere LSTM-Netzwerke einschließen; und optional
wobei das Decoder-Netzwerk einen RNN-Wandler einschließt.

13. Computerimplementiertes Verfahren, umfassend:
Empfangen einer neuen Audiodateneingabe; und
Verarbeiten der neuen Audiodateneingabe unter Verwendung eines Audioverarbeitungs-Neuronalen-Netzwerks, das unter Verwendung des Verfahrens nach einem der vorhergehenden Ansprüche trainiert wurde, um eine Audioverarbeitungsausgabe für eine Audioverarbeitungsaufgabe zu erzeugen.

14. System, umfassend einen oder mehrere Computer und eine oder mehrere Speichervorrichtungen, die Anweisungen speichern, die, wenn sie von dem einen oder den mehreren Computern ausgeführt werden, den einen oder die mehreren Computer veranlassen, die Operationen des jeweiligen Verfahrens nach einem der Ansprüche 1-13 durchzuführen.

15. Ein oder mehrere Computerspeichermedien, die Anweisungen speichern, die, wenn sie von einem oder mehreren Computern ausgeführt werden, den einen oder die mehreren Computer veranlassen, die Operationen des jeweiligen Verfahrens nach einem der Ansprüche 1-13 durchzuführen.

## Revendications

1. Procédé mis en œuvre par ordinateur d'entraînement d'un réseau neuronal de traitement audio configuré pour réaliser une tâche de traitement audio, dans lequel le réseau neuronal de traitement audio comprend au moins un premier réseau codeur ayant un premier ensemble de paramètres de réseau codeur et un réseau décodeur ayant un ensemble de paramètres de réseau décodeur, le procédé comprenant :
l'obtention (310) d'un ensemble de segments de données audio non étiquetés, chaque segment de données audio non étiqueté comportant une pluralité respective de trames de données audio correspondant à une pluralité de points temporels ;
la génération (320), à partir de l'ensemble de segments de données audio non étiquetés, d'un ensemble d'exemples d'entraînement de codeur dans lequel chaque exemple d'entraînement de codeur comporte une entrée d'entraînement de codeur respective et une étiquette cible de codeur respective, la génération comprenant, pour chaque exemple d'entraînement de codeur :
la génération de l'entrée d'entraînement de codeur respective en traitant un segment de données audio non étiqueté respectif dans l'ensemble de segments de données audio non étiquetés comprenant :
la génération d'un segment de données audio masqué respectif à partir du segment de données audio non étiqueté respectif, comprenant :
la sélection d'une ou plusieurs trames de données audio dans le segment de données audio non étiqueté respectif ; et
le remplacement de données dans les une ou plusieurs trames de données audio sélectionnées par des valeurs de données de bruit ou des valeurs de données définies sur des valeurs fixes prédéterminées qui sont indépendantes du contenu du segment de données audio ;
la génération d'un ensemble respectif de vecteurs projetés en appliquant une matrice de projection à chacun d'un ensemble de trames de données audio dans le segment de données audio non étiqueté respectif, dans lequel les éléments de la matrice de projection sont des valeurs sélectionnées aléatoirement selon une première distribution ; et
le traitement de l'ensemble respectif de vecteurs projetés pour générer une étiquette cible de codeur respective pour l'exemple d'entraînement de codeur ;
la réalisation (330) de l'entraînement d'un second réseau neuronal de codeur qui comprend au moins le premier réseau neuronal de codeur sur l'ensemble d'exemples d'entraînement de codeur générés pour mettre à jour au moins le premier ensemble de paramètres de réseau de codeur du premier réseau neuronal de codeur à un ensemble de valeurs pré-entraînées ;
dans lequel la réalisation (330) de l'entraînement du second réseau neuronal de codeur comprend l'entraînement du second réseau neuronal de codeur sur une tâche d'entraînement de codeur pour prédire, à partir d'une ou plusieurs trames de données audio d'entrée dans le segment de données audio masqué respectif, une étiquette pour les une ou plusieurs trames de données audio sélectionnées dans le segment de données audio non étiqueté respectif ;
l'obtention (340) d'un ou plusieurs exemples d'entraînement étiquetés, chaque exemple d'entraînement étiqueté comportant une entrée d'entraînement de données audio et une étiquette de traitement audio correspondante ; et
la réalisation (350) de l'entraînement du réseau neuronal de traitement audio sur les exemples d'entraînement étiquetés pour mettre à jour au moins le premier ensemble de paramètres de réseau du réseau codeur et le second ensemble de paramètres de réseau du réseau décodeur, dans lequel le premier ensemble de paramètres de réseau sont initialisés avec l'ensemble de valeurs pré-entraînées.

2. Procédé selon la revendication 1, comprenant également :
la réception d'une entrée audio provenant d'un dispositif d'entrée ; et
le traitement de l'entrée audio à l'aide au moins du réseau neuronal de traitement audio, après que le réseau neuronal de traitement audio ait été entraîné, pour générer la sortie de traitement audio correspondant à l'entrée audio reçue ; et éventuellement
le procédé comprenant également :
la délivrance en sortie de la sortie de traitement audio via un dispositif de sortie.

3. Procédé selon l'une quelconque des revendications précédentes, dans lequel la tâche de traitement audio est une tâche de reconnaissance vocale, et le réseau neuronal de traitement audio est configuré pour traiter une entrée de données audio pour générer une sortie qui caractérise le contenu linguistique représenté par l'entrée de données audio ; et éventuellement
dans lequel la sortie comporte une transcription textuelle prédite de l'entrée de données audio.

4. Procédé selon l'une quelconque des revendications précédentes, dans lequel chaque trame de données audio comporte une pluralité de coefficients de banc de filtres de signal audio ; et/ou
le procédé comprenant également :
avant la génération, à partir de l'ensemble de segments de données audio non étiquetés, de l'ensemble d'exemples d'entraînement de codeur, la réalisation d'une normalisation de chaque trame de données audio dans l'ensemble de segments de données audio non étiquetés à une moyenne prédéfinie et à un écart type prédéfini.

5. Procédé selon l'une quelconque des revendications précédentes, dans lequel l'ensemble de trames de données audio dans le segment de données audio non étiqueté respectif comporte les une ou plusieurs trames de données audio sélectionnées.

6. Procédé selon l'une quelconque des revendications précédentes, dans lequel les valeurs des données de bruit sont échantillonnées à partir d'une deuxième distribution ; et éventuellement
dans lequel la deuxième distribution est une distribution normale de moyenne nulle ; et/ou
dans lequel la sélection des une ou plusieurs trames de données audio dans le segment de données audio non étiqueté respectif comprend :
le fait de déterminer, pour chaque trame de données audio donnée du segment de données audio non étiqueté respectif, s'il faut sélectionner la trame de données audio donnée avec une probabilité prédéfinie, et en réponse au fait que la trame de données audio donnée a été déterminée comme étant sélectionnée, la sélection de la trame de données audio donnée et d'un nombre prédéfini de trames de données audio consécutives après la trame de données audio donnée dans le segment de données audio non étiqueté respectif.

7. Procédé selon l'une quelconque des revendications précédentes, dans lequel les valeurs des éléments de la matrice de projection restent inchangées lors de la génération de l'ensemble d'exemples d'entraînement de codeur ; et/ou dans lequel la première distribution est une distribution uniforme.

8. Procédé selon l'une quelconque des revendications précédentes, dans lequel le traitement de l'ensemble respectif de vecteurs projetés pour générer l'étiquette cible de codeur respective comprend, pour chaque vecteur projeté donné dans l'ensemble respectif de vecteurs projetés :
l'identification, à partir d'un ensemble de vecteurs de livre de codes, d'un vecteur de livre de codes qui a une distance la plus courte par rapport au vecteur projeté donné ; et
la détermination d'une valeur d'élément de l'étiquette cible de codeur comme index du vecteur de livre de codes identifié dans l'ensemble de vecteurs de livre de codes.

9. Procédé selon la revendication 8 et dépendant également de la revendication 5, dans lequel la tâche d'entraînement est une tâche servant à prédire, à partir du segment de données audio masqué respectif, les index des vecteurs de livre de codes identifiés pour les une ou plusieurs trames audio sélectionnées.

10. Procédé selon les revendications 8 ou 9, dans lequel l'ensemble de vecteurs de livre de codes sont générés aléatoirement selon une troisième distribution ; et éventuellement
dans lequel la troisième distribution est une distribution uniforme ; et/ou
dans lequel l'ensemble de vecteurs de livre de codes reste inchangé lors de la génération de l'ensemble d'exemples d'entraînement de codeur.

11. Procédé selon l'une quelconque des revendications précédentes, dans lequel le second réseau neuronal codeur comprend également une couche softmax après le premier réseau codeur ; et/ou
dans lequel le réseau neuronal de traitement audio est un modèle non continu configuré pour prédire une sortie de traitement audio pour un instant donné sur la base d'une entrée de données audio qui comporte des trames de données correspondant à des instants précédents et suivants l'instant donné ; ou
dans lequel le réseau neuronal de traitement audio est un modèle continu configuré pour prédire une sortie de traitement audio pour un instant donné sur la base d'une entrée de données audio qui comporte des trames de données correspondant à des instants précédents ou à l'instant donné.

12. Procédé selon l'une quelconque des revendications précédentes, dans lequel le réseau neuronal de traitement audio comporte également une ou plusieurs couches supplémentaires qui comportent une couche de projection entre le premier réseau codeur et le réseau décodeur ; et/ou
dans lequel le réseau décodeur comporte un ou plusieurs réseaux neuronaux récurrents (RNN) ; et éventuellement
dans lequel les un ou plusieurs RNN comportent un ou plusieurs réseaux LSTM ; et éventuellement
dans lequel le réseau décodeur comporte un transducteur RNN.

13. Procédé mis en œuvre par ordinateur comprenant :
la réception d'une nouvelle entrée de données audio ; et
le traitement de la nouvelle entrée de données audio à l'aide d'un réseau neuronal de traitement audio qui a été entraîné à l'aide du procédé selon une quelconque revendication précédente pour générer une sortie de traitement audio pour une tâche de traitement audio.

14. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 13.

15. Un ou plusieurs supports de stockage informatique stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.
